# EUROPEAN PATENT APPLICATION

(11) **EP 4 376 384 A1**
(43) Date of publication of application: **29.05.2024**
(21) Application number: 22844978.1
(22) Date of filing: 25.05.2022
(51) Int. Cl.: H04L 65/40, H04L 67/10, G06F 16/31, G06F 16/51, C12G 3/04

(54) **METHOD AND APPARATUS FOR SHARING LIQUOR MANUFACTURING METHOD, AND SERVER**

(30) Priority: 20.07.2021 CN 202110817865
(71) Applicant: Zhejiang Geely Holding Group Co., Ltd., Hangzhou City, Zhejiang 310051 (CN)
(72) Inventor: LI, Shufu, Hangzhou, Zhejiang 310051 (CN)
(74) Representative: Zaboliene, Reda
(86) International application number: PCT/CN2022/094958
(87) International publication number: WO 2023/000811

(57) **Abstract**

The present application relates to the technical field of liquor sets, and specifically relates to a method and apparatus for sharing a liquor manufacturing method, and a server. The method comprises: receiving an upload request and cellar identification information sent by a mobile terminal which has scanned the number identifier of a liquor bottle; obtaining cellar information according to the cellar identification information; sending, according to the upload request, an information input page to the mobile terminal; receiving liquor mixing scheme information and liquor mixing video information sent by the mobile terminal; generating a liquor mixing file according to the liquor mixing scheme information, the cellar information and the liquor mixing video information; and sending the liquor mixing file to a memory device, so that different users can acquire the liquor mixing file from the memory device. In the present application, a personalized liquor mixing scheme is uploaded to a server and stored so as to form a liquor mixing file sharing community. A drinker can choose the liquor mixing file according to his/her own preferences, and can place an order according to the liquor mixing file. Therefore, the drinker can choose his/her favorite taste and style, improving the pleasure of drinking.

## Description

### TECHNICAL FIELD

This application relates to the technical field of liquor utensils, in particular to a liquor manufacturing sharing method, an apparatus and a server.

### BACKGROUND TECHNIQUE

With the continuous development of society, people's quality of life has been greatly improved. In festivals and various parties and other activities, the utilization rate of liquor is getting higher and higher, and people continue to pursue high quality, and the original pulp liquor with good flavor is becoming more and more popular. However, due to the large number of liquor cellars, the original pulp liquor generated by each liquor cellar has different flavor, and the liquor mixed with different original pulp liquor has different taste.

The liquor grade of the existing technology is mainly assessed by the winery technical experts, and its rating is completely divorced from the preferences or tasting habits of ordinary consumers, resulting in the flavor grade of the liquor is often only related to the price and the internal rating of the winery, and the grade is divorced from the actual tasting needs and tasting culture of consumers. It deprives ordinary consumers of the opportunity to grade liquor according to their taste, and there is also the problem of lack of consumption basis for grade classification.

Based on the shortcomings of the existing technology, it is urgent to study a liquor manufacturing sharing method, apparatus and server to solve the above problems.

### SUMMARY OF THE INVENTION

According to various embodiments of the present application, liquor manufacturing sharing method is provided, which includes:
receiving an upload request and a liquor cellar identification information sent by a mobile terminal after scanning a digital identification of the liquor bottle;
obtaining a cellar information according to the liquor cellar identification information; wherein the liquor cellar information at least includes a liquor cellar number identification, a liquor degree identification of a liquor cellar, a flavor identification and a liquor cellar grade information;
sending the information input page to the mobile terminal according to the upload request;
receiving a bartending scheme information and a bartending video information sent by the mobile terminal, the bartending scheme information and the bartending video information inputted through an information input page of a client;
generating a bartending file based on the bartending scheme information, the liquor cellar information and the bartending video information;
sending the bartending file to a storage apparatus, so that different users can obtain the bartending file from the storage apparatus.

In one embodiment, the bartending scheme information includes at least a bartending name;
after generating the bartending file based on the bartending scheme information, the liquor cellar information and the bartending video information, the method also includes:
obtaining the bartending name in the bartending scheme information;
naming the bartending file according to the bartending name.

In one embodiment, before sending the bartending file to the storage apparatus, it also includes:
obtaining the name of the bartending file, and extracting the keyword of the name of the bartending file;
labeling the keyword as the index name of the bartending file.

In one embodiment, before receiving the upload request and the liquor cellar identification information sent by the mobile terminal after scanning the digital identification of the liquor bottle, the method also includes:
receiving a booking information sent by the mobile terminal after scanning the digital identifier of the bottle; wherein the booking information includes a required quantity and a type of liquor cellar.

In one embodiment, after sending of the bartending file to the storage apparatus, the method also includes:
obtaining the text word set according to the word segmentation processing of the bartending video information;
determined a first key word in the text word set according to words of the text word set;
obtaining a regional information of the mobile terminal;
matching words in the regional information of the mobile terminal with the regional features in the preset regional feature database to determine a second key word in the bartending video information;
acting the first key word and the second key words as text key words of the bartending video information;
determining a feature word vector sequence used to represent the bartending video information, according to the text key words of the bartending video information, and matching the bartending file according to the feature word vector sequence and the location of the mobile terminal;
processing regional recognition to the feature word vector sequence based on a regional recognition model to obtain the regional attribute of the bartending video information; wherein the region recognition model is determined by machine learning based on training text and the region attribute label corresponding to the training text; the regional features include at least one selected from a group consisting of the geographical name of the region, the name of the iconic place contained in the region, and the name of the marking agency contained in the region.

In one embodiment, after sending of the bartending file to the storage apparatus, the method includes:
obtaining the historical behavior object of the mobile terminal user, and using the historical behavior object to determine the user behavior feature vector of the mobile terminal user;
obtaining multiple behavioral users of the object to be selected, and use the behavioral users of each object to be selected to determine the object behavior feature vector of the object to be selected;
inputting the user behavior feature vector and the object behavior feature vector of each object to be selected into the behavior recognition model for behavior recognition processing, and obtaining the behavior probability of the mobile terminal user towards the selected object;
determining the target behavior object of the mobile terminal user from the multiple objects to be selected based on the behavior probability of the mobile terminal user towards the selected object;
wherein, the behavior recognition model includes a prediction model based on the behavior recognition training of user behavior feature vector, user no-behavior feature vector and object behavior feature vector.

In one embodiment, after receiving the booking information sent by the mobile terminal after scanning the digital identifier of the bottle, the method also includes:
receiving the cellar evaluation information entered by the mobile terminal on the information input page;
grading or optimizing the cellar according to the cellar evaluation information and demand amount;
sorting the grade of the cellar, to obtain the grade ranking of the cellar.

In one embodiment, after receiving the booking information sent by the mobile terminal after scanning the digital identifier of the bottle, the method also includes:
obtaining the evaluation results of different mobile terminals;
according to the evaluation results, sorting the grade of the cellar and obtaining a preset cellar grade ranking;
obtaining the demand amount sent by the mobile terminal, optimizing the preset cellar grade ranking according to the demand amount, and obtaining the cellar grade ranking.

In one embodiment, the bartending scheme information is generated by the drinker after bartending the liquor on the basis of the digital identification of the bottle or self-experience.

In one embodiment, before receiving an upload request and a liquor cellar identification information sent by a mobile terminal after scanning a digital identification of the liquor bottle, the method also includes:
receiving the booking information sent by the mobile terminal according to the type of the liquor cellar; wherein, the booking information is the demand amount corresponding to the type of the liquor cellar.

In one embodiment, after generating the bartending file based on the bartending scheme information, the liquor cellar information and the bartending video information, the method includes:
receiving booking requests generated by the mobile terminal based on bartending files;
obtaining a cellar information corresponding to each bottle in the bartending scheme according to the bartending document;
generating the booking information based on the cellar information corresponding to each bottle;
assembling the liquor components according to the booking information.

The application also provides a liquor manufacturing sharing apparatus as described above, includes:
an information receiving module (1), configured to receive the upload request and the liquor cellar identification information sent by the mobile terminal after scanning the digital identifier of the liquor bottle; and receive the bartending scheme information and the bartending video information sent by the mobile terminal, the bartending scheme information and bartending video information inputted through the information input page of the client;
a first execution module (2), configured to obtain the cellar information according to the liquor cellar identification information; wherein the liquor cellar information at least includes the liquor cellar number identification, the liquor degree identification of the liquor cellar, the flavor identification and the liquor cellar grade information;
a second executive module (3), configured to send the information input page to the mobile terminal according to the upload request, and generate the bartending file based on the bartending scheme information, the liquor cellar information and the bartending video information;
an information sending module (4), configured to send the bartending file to the storage apparatus so that different users can obtain the bartending file from the storage apparatus.

In one embodiment, the apparatus also includes:
an obtaining module (5), configured to obtain the bartending name in the bartending scheme information;
a third execution module (6), configured to name the bartending file according to the bartending name.

The application also provides, on the other hand, a server that includes a processor and a memory in which at least one instruction or at least one program is stored and which is loaded and executed by the processor to achieve a liquor manufacturing sharing as described above.

Details of one or more embodiments of this application are presented in the attached drawings and descriptions below. Other features, purposes and advantages of this application will become apparent from the description, drawings and claims.

### DESCRIPTION OF DRAWINGS

In order to more clearly illustrate the technical proposal of the present application, a brief description of the drawings required to be used in the embodiment or prior art description is given below. It is evident that the drawings described below are merely embodiments of the present application, and that other drawings may be obtained from them without creative effort on the part of the ordinary person skilled in the art.

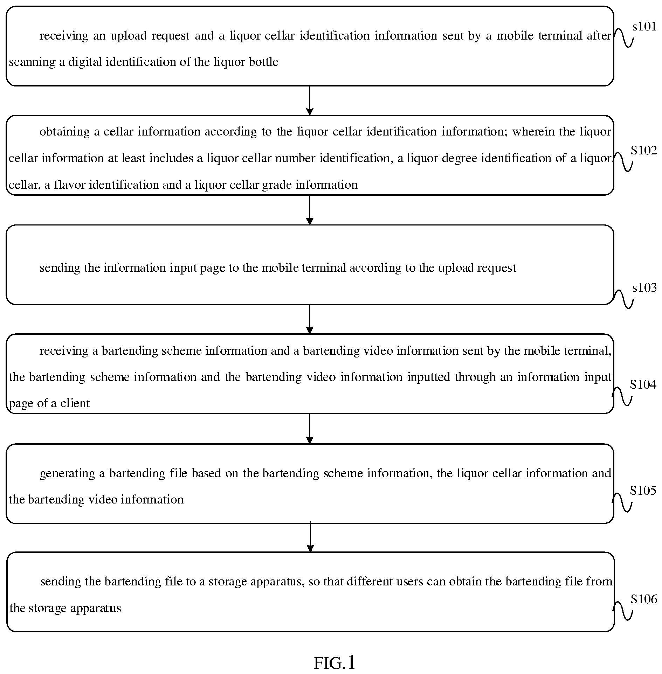

FIG. 1 is a flow chart of a liquor manufacturing sharing method described in the present embodiment;
FIG. 2 shows the structure diagram of the liquor manufacturing sharing apparatus described in the present embodiment.

Among them, the picture marks in the figure correspond to:
1- information receiving module; 2- first execution module; 3- second execution module; 4- information sending module; 5- obtaining module; 6- third execution module.

### EMBODIMENTS OF THE PRESENT APPLICATION

The technical scheme in the embodiments of this application will be clearly and completely described in combination with the drawings attached to the embodiments of this application. Obviously, the embodiments described are only part of the embodiments of this application, but not all embodiments. Based on the embodiments in this application, all other embodiments obtained by a person of ordinary skill in the field without creative labor shall fall within the scope of protection in this application.

It should be noted that the terms "first", "second", etc. in the description and claims of this application and in the drawings above are used to distinguish similar objects and are not necessarily used to describe a particular order or sequence. It should be understood that the data thus used are interchangeable where appropriate so that embodiments of the present application described herein can be implemented in an order other than those illustrated or described herein. In addition, the terms "including" and "having", and any variations thereof, are intended to cover non-exclusive inclusions, for example, a process, method, system, product or apparatus including a series of steps or units need not be limited to those steps or units that are clearly listed. Instead, it may include other steps or units that are not clearly listed or are inherent to these processes, methods, products or equipment.

The existing technology has the following disadvantages: The liquor grade of the existing technology is mainly assessed by the winery technical experts, and its rating is completely divorced from the preferences or tasting habits of ordinary consumers, resulting in the flavor grade of the liquor is often only related to the price and the internal rating of the winery, and the grade is divorced from the actual tasting needs and tasting culture of consumers. It deprives ordinary consumers of the opportunity to grade liquor according to their taste, and there is also the problem of lack of consumption basis for grade classification.

In view of the defects of the prior art, this application forms a bartending file sharing community by uploading the personal bartending scheme to the server and storing it. Drinkers can choose the bartending file according to their own preferences and place orders according to the bartending file, which enables drinkers to choose their own taste and style and enhances the enjoyment of drinking. In addition, the drinkers who apply for this application can sort the cellar grade according to their own preferences and liquor tasting habits, so that the cellar grade is consistent with the preferences and liquor tasting habits of ordinary consumers, so as to avoid the liquor flavor grade from the actual liquor tasting needs and liquor tasting culture of consumers.

### Embodiment 1

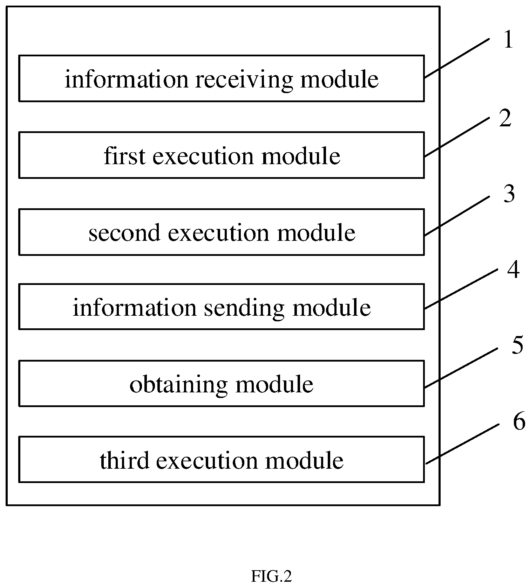

Referring to FIG.l to FIG.2, the present embodiment provides a liquor manufacturing sharing method, which includes:
S101: receiving an upload request and a liquor cellar identification information sent by a mobile terminal after scanning a digital identification of the liquor bottle;
S 102: obtaining a cellar information according to the liquor cellar identification information; wherein the liquor cellar information at least includes a liquor cellar number identification, a liquor degree identification of a liquor cellar, a flavor identification and a liquor cellar grade information;
S 103: sending the information input page to the mobile terminal according to the upload request;
S104: receiving a bartending scheme information and a bartending video information sent by the mobile terminal, the bartending scheme information and the bartending video information inputted through an information input page of a client;
S105: generating a bartending file based on the bartending scheme information, the liquor cellar information and the bartending video information;
S 106: sending the bartending file to a storage apparatus, so that different users can obtain the bartending file from the storage apparatus.

It should be noted that: in this implementation, a bartending file sharing community is formed by uploading the personal bartending scheme to the server and storing it. Drinkers can choose the bartending file according to their own preferences and place orders according to the bartending file, which enables drinkers to choose their favorite taste and style and improves the pleasure of drinking. In addition, the drinkers who apply for this application can sort the cellar grade according to their own preferences and liquor tasting habits, so that the cellar grade is consistent with the preferences and liquor tasting habits of ordinary consumers, so as to avoid the liquor flavor grade from the actual liquor tasting needs and liquor tasting culture of consumers.

In some possible embodiments, the bartending scheme information includes at least the bartending name;

after generating the bartending file based on the bartending scheme information, the liquor cellar information and the bartending video information, it also includes:
obtaining the bartending name in the bartending scheme information;
naming the bartending file according to the bartending name.

In some possible embodiments, after generating the bartending file based on the bartending scheme information, the liquor cellar information and the bartending video information, it also includes:
determining whether there is a bartending file with the same name as the above bartending file in the stored bartending file;
when a bartending file with the same name as the bartending file is stored, comparing the uploaded video data with the same name with the stored video data; according to the comparison results obtained by comparing the uploaded video data with the stored video data, storing only one copy of the same video data.

Specifically, receive the bartending video information sent by the mobile terminal, obtain the name of the uploaded video corresponding to the bartending video information, and identify whether there is any video data with the same name as the uploaded video in the stored video data; if the stored video data with the same name as the uploaded video is identified, compare the uploaded video data with the same name with the stored video data; according to the comparison results obtained by comparing the uploaded video data with the stored video data, only one copy of the same video data is stored;

Specifically, if the stored video data is identified as having stored video data with the same name as the uploaded video, compare the uploaded video data with the same name with the stored video data includes:
if the stored video data is identified as having the same name as the uploaded video data, obtaining the video verification code corresponding to the uploaded video data and the stored video data; comparing whether the video check code corresponding to the uploaded video data and the stored video data is the same; if the video verification codes corresponding to the uploaded video data and the stored video data are different, naming the subsequent stored video data according to the preset rules.

In some possible embodiments, before sending the bartending file to the storage apparatus includes:
obtaining the name of the bartending file, and extracting keyword of the name of the bartending file;
labeling the keyword as the index name of the bartending file.

In some possible embodiments, before receiving the upload request and the liquor cellar identification information sent by the mobile terminal after scanning the digital identification of the liquor bottle , further include:
receiving a booking information sent by the mobile terminal after scanning the digital identifier of the bottle; wherein the booking information includes a required quantity and a type of liquor cellar.

In some possible embodiments, before sending the bartending file to the storage apparatus, it also includes:
obtaining the name of the bartending file, and extracting the keyword of the name of the bartending file;
labeling the keyword as the index name of the bartending file.

In some possible embodiments, before receiving the upload request and the liquor cellar identification information sent by the mobile terminal after scanning the digital identification of the liquor bottle, the method also includes:
obtaining the text word set according to the word segmentation processing of the bartending video information;
determined a first key word in the text word set according to words of the text word set;
obtaining a regional information of the mobile terminal;
matching words in the regional information of the mobile terminal with the regional features in the preset regional feature database to determine a second key word in the bartending video information;
acting the first key word and the second key words as text key words of the bartending video information;
determining a feature word vector sequence used to represent the bartending video information, according to the text key words of the bartending video information, and matching the bartending file according to the feature word vector sequence and the location of the mobile terminal;
processing regional recognition to the feature word vector sequence based on a regional recognition model to obtain the regional attribute of the bartending video information; wherein the region recognition model is determined by machine learning based on training text and the region attribute label corresponding to the training text; the regional features include at least one selected from a group consisting of the geographical name of the region, the name of the iconic place contained in the region, and the name of the marking agency contained in the region.

This application embodiment is based on artificial intelligence technology to identify regional attributes of bartending video information. Artificial Intelligence (AI) is a theory, method, technology and application system that uses digital computers or machines controlled by digital computers to simulate, extend and expand human intelligence, perceive the environment, acquire knowledge and use knowledge to obtain the best results. In other words, artificial intelligence is a comprehensive technology of computer science that seeks to understand the nature of intelligence and produce a new kind of intelligent machine that can react in a similar way to human intelligence. Artificial intelligence is to study the design principles and implementation methods of various intelligent machines, so that the machine has the functions of perception, reasoning and decision-making. Artificial intelligence technology is a comprehensive subject, involving a wide range of fields, both hardware level and software level technology, among which artificial intelligence software technology mainly includes computer vision technology, speech processing technology, natural language processing technology and machine learning/deep learning and other directions.

The regional recognition model of this application embodiment is determined by Machine Learning. Machine learning (ML) is a multidisciplinary interdisciplinary discipline involving probability theory, statistics, approximation theory, convex analysis, algorithm complexity theory and other disciplines. Specialized in the study of how computers simulate or implement human learning behavior to acquire new knowledge or skills, reorganize the existing knowledge structure to continuously improve its own performance. Machine learning is the core of artificial intelligence, is the fundamental way to make the computer intelligent, and its application covers all fields of artificial intelligence. Machine learning and deep learning often include artificial neural networks, confidence networks, reinforcement learning, transfer learning, inductive learning, and other techniques.

In some possible embodiments, after sending of the bartending file to the storage apparatus, the method includes:
obtaining the historical behavior object of the mobile terminal user, and using the historical behavior object to determine the user behavior feature vector of the mobile terminal user;
obtaining multiple behavioral users of the object to be selected, and use the behavioral users of each object to be selected to determine the object behavior feature vector of the object to be selected;
inputting the user behavior feature vector and the object behavior feature vector of each object to be selected into the behavior recognition model for behavior recognition processing, and obtaining the behavior probability of the mobile terminal user towards the selected object;
determining the target behavior object of the mobile terminal user from the multiple objects to be selected based on the behavior probability of the mobile terminal user towards the selected object;
wherein, the behavior recognition model includes a prediction model based on the behavior recognition training of user behavior feature vector, user no-behavior feature vector and object behavior feature vector.

In some possible embodiments, after receiving the booking information sent by the mobile terminal after scanning the digital identifier of the bottle, the method also includes:
receiving the cellar evaluation information entered by the mobile terminal on the information input page;
grading or optimizing the cellar according to the cellar evaluation information and demand amount;
sorting the grade of the cellar, to obtain the grade ranking of the cellar.

In some possible embodiments, after receiving the booking information sent by the mobile terminal after scanning the digital identifier of the bottle, the method also includes:
obtaining the evaluation results of different mobile terminals;
according to the evaluation results, sorting the grade of the cellar and obtaining a preset cellar grade ranking;
obtaining the demand amount sent by the mobile terminal, optimizing the preset cellar grade ranking according to the demand amount, and obtaining the cellar grade ranking.

In some possible embodiments, the bartending scheme information is generated by the drinker after bartending the liquor on the basis of the digital identification of the bottle or self-experience.

In some possible embodiments, before receiving an upload request and a liquor cellar identification information sent by a mobile terminal after scanning a digital identification of the liquor bottle, the method also includes:
receiving the booking information sent by the mobile terminal according to the type of the liquor cellar; wherein, the booking information is the demand amount corresponding to the type of the liquor cellar.

In some possible embodiments, after receiving the booking information sent by the mobile terminal according to the type of the liquor cellar, further includes:
receiving the booking information sent by the mobile terminal, wherein the booking information is send by the mobile terminal after the mobile terminal is connected to the cloud server network by scanning and identifying the digital identifier;
sending the information input page to the mobile terminal according to a booking request;
receiving the demand amount and the type of the liquor cellar sent by the mobile terminal, wherein the demand amount and the type of the liquor cellar are input on the information input page through the client;
generating a matching request based on the demand amount and the type of the liquor cellar;
generating the booking information based on the matching request.

In some possible embodiments, after receiving the demand amount and the type of the liquor cellar sent by the mobile terminal, wherein the demand amount and the type of the liquor cellar are input on the information input page through the client, also include:
receiving the cellar information entered by the mobile terminal through the information input page;
sending the e-gift, e-currency or prize information corresponding to the liquor cellar information.

Specifically, the mobile terminal can obtain the e-gifts, the e-money or the prize information sent by the winery client or cloud server.

In some possible embodiments, after generating the bartending file based on the bartending scheme information, the liquor cellar information and the bartending video information, the method includes:
receiving booking requests generated by the mobile terminal based on bartending files;
obtaining a cellar information corresponding to each bottle in the bartending scheme according to the bartending document;
generating the booking information based on the cellar information corresponding to each bottle;
assembling the liquor components according to the booking information.

This application also protects, on the other hand, the application provides a liquor manufacturing sharing apparatus, applying the liquor manufacturing sharing method described above, which includes:
an information receiving module (1), configured to receive the upload request and the liquor cellar identification information sent by the mobile terminal after scanning the digital identifier of the liquor bottle; and receive the bartending scheme information and the bartending video information sent by the mobile terminal, the bartending scheme information and bartending video information inputted through the information input page of the client;
a first execution module (2), configured to obtain the cellar information according to the liquor cellar identification information; wherein the liquor cellar information at least includes the liquor cellar number identification, the liquor degree identification of the liquor cellar, the flavor identification and the liquor cellar grade information;
a second executive module (3), configured to send the information input page to the mobile terminal according to the upload request, and generate the bartending file based on the bartending scheme information, the liquor cellar information and the bartending video information;
an information sending module (4), configured to send the bartending file to the storage apparatus so that different users can obtain the bartending file from the storage apparatus.

In some possible embodiments, the apparatus also includes:
an obtaining module (5), configured to obtain the bartending name in the bartending scheme information;
a third execution module (6), configured to name the bartending file according to the bartending name.

The application also protects, on the other hand, a server that includes a processor and a memory in which at least one instruction or at least one program is stored and which is loaded and executed by the processor to achieve a shared method of making drinking liquor as described above.

Although this application has been described by preferred embodiments, this application is not limited to the embodiments described herein, but also includes the various changes and variations made without leaving the scope of this application.

In this paper, the former, the latter, the upper, the lower and other positional words involved are defined by the positions of the parts in the diagram and the parts among each other in the attached diagram, just to express the clarity and convenience of the technical scheme. It is to be understood that the use of said locational terms shall not limit the scope of protection claimed in this application.

In the absence of conflict, the above embodiments and the features in the embodiments in this paper can be combined.

The above disclosure is only a better embodiment of this application, and of course cannot be used to define the scope of the rights of this application, so equivalent changes made under the claims of this application remain within the scope of this application.

## Claims

1. A liquor manufacturing sharing method, **characterized in that**, the method comprises:
receiving an upload request and a liquor cellar identification information sent by a mobile terminal after scanning a digital identification of the liquor bottle;
obtaining a cellar information according to the liquor cellar identification information; wherein the liquor cellar information at least comprises a liquor cellar number identification, a liquor degree identification of a liquor cellar, a flavor identification and a liquor cellar grade information;
sending the information input page to the mobile terminal according to the upload request;
receiving a bartending scheme information and a bartending video information sent by the mobile terminal, the bartending scheme information and the bartending video information inputted through an information input page of a client;
generating a bartending file based on the bartending scheme information, the liquor cellar information and the bartending video information;
sending the bartending file to a storage apparatus, so that different users can obtain the bartending file from the storage apparatus.

2. A liquor manufacturing sharing method according to claim **1, characterized in that**, the bartending scheme information comprises at least a bartending name;
after generating the bartending file based on the bartending scheme information, the liquor cellar information and the bartending video information, the method also comprises:
obtaining the bartending name in the bartending scheme information;
naming the bartending file according to the bartending name.

3. A liquor manufacturing sharing method according to claim **2, characterized in that**, before sending the bartending file to the storage apparatus, it also comprises:
obtaining the name of the bartending file, and extracting the keyword of the name of the bartending file;
labeling the keyword as the index name of the bartending file.

4. A liquor manufacturing sharing method according to claim **1, characterized in that**, before receiving the upload request and the liquor cellar identification information sent by the mobile terminal after scanning the digital identification of the liquor bottle, the method also comprises:
receiving a booking information sent by the mobile terminal after scanning the digital identifier of the bottle; wherein the booking information comprises a required quantity and a type of liquor cellar.

5. A liquor manufacturing sharing method according to claim **1, characterized in that**, after sending of the bartending file to the storage apparatus, the method also comprises:
obtaining the text word set according to the word segmentation processing of the bartending video information;
determined a first key word in the text word set according to words of the text word set;
obtaining a regional information of the mobile terminal;
matching words in the regional information of the mobile terminal with the regional features in the preset regional feature database to determine a second key word in the bartending video information;
acting the first key word and the second key words as text key words of the bartending video information;
determining a feature word vector sequence used to represent the bartending video information, according to the text key words of the bartending video information, and matching the bartending file according to the feature word vector sequence and the location of the mobile terminal;
processing regional recognition to the feature word vector sequence based on a regional recognition model to obtain the regional attribute of the bartending video information; wherein the region recognition model is determined by machine learning based on training text and the region attribute label corresponding to the training text; the regional features comprise at least one selected from a group consisting of the geographical name of the region, the name of the iconic place contained in the region, and the name of the marking agency contained in the region.

6. A liquor manufacturing sharing method according to claim **5, characterized in that**, after sending of the bartending file to the storage apparatus, the method comprises:
obtaining the historical behavior object of the mobile terminal user, and using the historical behavior object to determine the user behavior feature vector of the mobile terminal user;
obtaining multiple behavioral users of the object to be selected, and use the behavioral users of each object to be selected to determine the object behavior feature vector of the object to be selected;
inputting the user behavior feature vector and the object behavior feature vector of each object to be selected into the behavior recognition model for behavior recognition processing, and obtaining the behavior probability of the mobile terminal user towards the selected object;
determining the target behavior object of the mobile terminal user from the multiple objects to be selected based on the behavior probability of the mobile terminal user towards the selected object;
wherein, the behavior recognition model comprises a prediction model based on the behavior recognition training of user behavior feature vector, user no-behavior feature vector and object behavior feature vector.

7. A liquor manufacturing sharing method according to claim **4, characterized in that**, after receiving the booking information sent by the mobile terminal after scanning the digital identifier of the bottle, the method also comprises:
receiving the cellar evaluation information entered by the mobile terminal on the information input page;
grading or optimizing the cellar according to the cellar evaluation information and demand amount;
sorting the grade of the cellar, to obtain the grade ranking of the cellar.

8. A liquor manufacturing sharing method according to claim **4, characterized in that**, after receiving the booking information sent by the mobile terminal after scanning the digital identifier of the bottle, the method also comprises:
obtaining the evaluation results of different mobile terminals;
according to the evaluation results, sorting the grade of the cellar and obtaining a preset cellar grade ranking;
obtaining the demand amount sent by the mobile terminal, optimizing the preset cellar grade ranking according to the demand amount, and obtaining the cellar grade ranking.

9. A liquor manufacturing sharing method according to claim **4, characterized in that**, the bartending scheme information is generated by the drinker after bartending the liquor on the basis of the digital identification of the bottle or self-experience.

10. A liquor manufacturing sharing method according to claim **1, characterized in that**, before receiving an upload request and a liquor cellar identification information sent by a mobile terminal after scanning a digital identification of the liquor bottle, the method also comprises:
receiving the booking information sent by the mobile terminal according to the type of the liquor cellar; wherein, the booking information is the demand amount corresponding to the type of the liquor cellar.

11. A liquor manufacturing sharing method according to claim **1, characterized in that**, after generating the bartending file based on the bartending scheme information, the liquor cellar information and the bartending video information, the method comprises:
receiving booking requests generated by the mobile terminal based on bartending files;
obtaining a cellar information corresponding to each bottle in the bartending scheme according to the bartending document;
generating the booking information based on the cellar information corresponding to each bottle;
assembling the liquor components according to the booking information.

12. A liquor manufacturing sharing apparatus, **characterized in that**, the apparatus applying to a liquor manufacturing sharing as described in any of the claims **1-11,** comprises:
an information receiving module (1), configured to receive the upload request and the liquor cellar identification information sent by the mobile terminal after scanning the digital identifier of the liquor bottle; and receive the bartending scheme information and the bartending video information sent by the mobile terminal, the bartending scheme information and bartending video information inputted through the information input page of the client;
a first execution module (2), configured to obtain the cellar information according to the liquor cellar identification information; wherein the liquor cellar information at least comprises the liquor cellar number identification, the liquor degree identification of the liquor cellar, the flavor identification and the liquor cellar grade information;
a second executive module (3), configured to send the information input page to the mobile terminal according to the upload request, and generate the bartending file based on the bartending scheme information, the liquor cellar information and the bartending video information;
an information sending module (4), configured to send the bartending file to the storage apparatus so that different users can obtain the bartending file from the storage apparatus.

13. The liquor manufacturing sharing apparatus according to claim **12** is **characterized in that**, the apparatus also comprises:
an obtaining module (5), configured to obtain the bartending name in the bartending scheme information;
a third execution module (6), configured to name the bartending file according to the bartending name.

14. A server, **characterized in that**, it comprises a processor and a memory in which at least one instruction or at least one program is stored, and at least one instruction or at least one program is loaded and executed by the processor to achieve a liquor manufacturing sharing method as described in any of the items of claims **1** to **11.**
